# EUROPEAN PATENT APPLICATION

(11) **EP 4 696 490 A1**
(43) Date of publication of application: **18.02.2026**
(21) Application number: 25192821.4
(22) Date of filing: 30.07.2025
(51) Int. Cl.: B29D 30/06, B29C 33/10, B29C 35/02

(54) **TIRE VULCANIZATION MOLD**

(30) Priority: 13.08.2024 JP 2024134807
(71) Applicant: Sumitomo Rubber Industries, Ltd., Kobe-shi, Hyogo 651-0072 (JP)
(72) Inventor: SAKAKIBARA, Yuta, Kobe-shi, 651-0072 (JP); MIYAZAWA, Ken, Kobe-shi, 651-0072 (JP); ARAI, Mahito, Kobe-shi, 651-0072 (JP); SUMITANI, Takahiro, Kobe-shi, 651-0072 (JP)
(74) Representative: Manitz Finsterwald Patent- und Rechtsanwaltspartnerschaft mbB

(57) **Abstract**

A tire vulcanization mold 10 includes a forming surface 22, a recess 26, a vent hole 28, and a spring vent 50. The forming surface 22 forms an outer shape of a tire. The recess 26 is formed in the forming surface 22. The recess 26 includes a bottom portion 26a. The vent hole 28 is formed in a part of the bottom portion 26a. The spring vent 50 is mounted in the vent hole 28. The spring vent 50 includes a tubular housing 51 having a through hole 52 formed therein and a stem 55 inserted into the through hole 52. A depth h of the recess 26 is 1.0 mm or less. A distance r between an edge 52a of the through hole 52 and an edge 26a1 of the bottom portion 26a is equal to or less than a diameter d of the through hole 52.

## Description

### BACKGROUND OF THE INVENTION

### Field of the Invention

The present invention relates to a tire vulcanization mold.

### Background Art

Japanese Laid-Open Patent Publication No. 2017-113895 discloses a tire vulcanization mold including a forming surface, a recessed groove, a plug mounting hole, and a vent plug. The forming surface is a surface for forming a tire surface. The recessed groove is recessed relative to the forming surface. The plug mounting hole is provided in the recessed groove. The plug mounting hole provides communication between the inside of the mold and the outside of the mold. The vent plug is fitted into the plug mounting hole. The vent plug includes a housing and a stem. The housing has a tubular shape and has a ventilation hole extending from the inside of the recessed groove to the outside of the mold on the radially inner side. The stem is inserted into the radially inner side of the housing and opens and closes the ventilation hole. The mold interior end surface of the housing is located on the outer side of the mold with respect to the forming surface.

The present inventors desire to, when vulcanizing a tire using a tire vulcanization mold provided with a spring vent, improve performance of discharging gas from the tire vulcanization mold.

### SUMMARY OF THE INVENTION

A tire vulcanization mold disclosed herein includes a forming surface, a recess, a vent hole, and a spring vent. The forming surface is a surface for forming an outer shape of a tire. The recess is formed in the forming surface and includes a bottom portion. The vent hole is formed in a part of the bottom portion of the recess. The spring vent is mounted in the vent hole. The spring vent includes a tubular housing having a through hole formed therein and a stem inserted into the through hole of the housing. The recess has a depth of 1.0 mm or less. A distance between an edge of the through hole and an edge of the bottom portion of the recess is equal to or less than a diameter of the through hole.

With the tire vulcanization mold, the performance of discharging gas from the tire vulcanization mold during vulcanization of a tire is improved.

### BRIEF DESCRIPTION OF THE DRAWINGS

FIG. 1 is a schematic diagram of a tire vulcanizer 1;
FIG. 2 is a cross-sectional view of a side mold 20;
FIG. 3 is a cross-sectional view of the side mold 20;
FIG. 4 is a plan view of the side mold 20;
FIG. 5 is a plan view of a side mold 20A according to another embodiment;
FIG. 6 is a plan view of a side mold 20B according to still another embodiment; and
FIG. 7 is a plan view of a side mold 20C according to still another embodiment.

### DETAILED DESCRIPTION

Hereinafter, embodiments of the present invention will be described with reference to the drawings. The present invention is not limited to the following embodiments. Each drawing is schematically drawn and does not necessarily reflect the actual one. In addition, each drawing shows only one example, and does not limit the present invention unless otherwise specified. Moreover, members and parts that perform the same effect are designated as appropriate by the same reference characters, and the redundant description thereof is omitted.

### <Tire Vulcanizer 1>

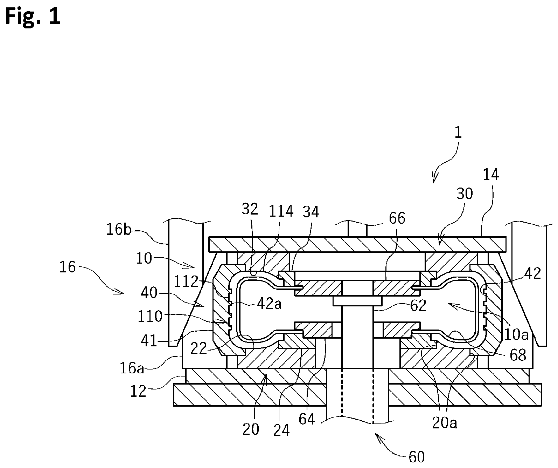

FIG. 1 is a schematic diagram of a tire vulcanizer 1. FIG. 1 schematically shows a cross-section of the tire vulcanizer 1 during vulcanization of a raw cover 110. In FIG. 1, hatching of the raw cover 110 and a bladder 68 is omitted.

As shown in FIG. 1, the tire vulcanizer 1 includes a tire vulcanization mold 10 and a bladder center mechanism 60. The bladder center mechanism 60 includes the bladder 68 placed at the center of the tire vulcanizer 1. In the tire vulcanizer 1, the raw cover 110 supported by the bladder 68 is pressed against the tire vulcanization mold 10 and vulcanized, thereby molding a tire.

### <Raw Cover 110>

The raw cover 110 is an unvulcanized tire before vulcanization molding and is also referred to as green tire. Although not shown, the raw cover 110 is a tubular member obtained by attaching unvulcanized sidewall rubbers and tread rubber to base materials such as a bead wire, a carcass, and a belt. The raw cover 110 has a tread portion 112 and sidewall portions 114. The tread portion 112 is a portion that forms a surface, of a vulcanized tire, which comes into contact with a road surface. Each sidewall portion 114 is a portion that forms a side surface of the vulcanized tire.

### <Tire Vulcanization Mold 10>

The tire vulcanization mold 10 includes a plurality of molds 20, 30, and 40. The plurality of molds 20, 30, and 40 are arranged in a toroidal shape so as to surround the bladder 68. The tire vulcanization mold 10 includes the plurality of molds 20, 30, and 40 arranged around the bladder 68. The material of the tire vulcanization mold 10 may be a metal such as aluminum or an aluminum alloy. The material of the tire vulcanization mold 10 is not particularly limited.

During vulcanization of the tire, the molds 20, 30, and 40 are heated by a heater which is not shown. The molds 20, 30, and 40 have forming surfaces 22, 32, and 42 for forming the outer shape of the tire. During vulcanization of the tire, the forming surfaces 22, 32, and 42 of the molds 20, 30, and 40 are contiguous with each other to form a mold internal space 10a. The raw cover 110 is heated and pressurized while being pressed against the forming surfaces 22, 32, and 42 in the mold internal space 10a, thereby undergoing vulcanization molding.

The forming surfaces 22, 32, and 42 of the molds 20, 30, and 40 are provided with recesses and projections corresponding to the desired outer shape of the tire. For example, the forming surfaces 22 and 32 of the molds 20 and 30 may be formed with recesses and projections for displaying information about the tire on the sidewall portions of the tire. The forming surface 42 of the mold 40 is formed with recesses and projections for forming a tread pattern corresponding to the intended functions, a wear indicator, etc., on the tread portion of the tire.

The molds 20 and 30 are also referred to as side molds. The sidewall portions 114 of the raw cover 110 are pressed against the forming surfaces 22 and 32 of the molds 20 and 30. Accordingly, the sidewall portions of the tire are vulcanized and molded. The mold 40 is also referred to as tread mold. The tread portion 112 of the raw cover 110 is pressed against the forming surface 42 of the mold 40. Accordingly, the tread portion of the tire is vulcanized and molded.

The mold 20 has an annular shape. The mold 20 is provided on the lower side of the tire vulcanization mold 10. The mold 20 is mounted on a mold base 12. The mold base 12 is mounted, for example, on a press stand (not shown). A bead ring 24 for holding a bead portion of the raw cover 110 is provided on the mold 20.

The mold 30 has an annular shape, similar to the mold 20. The mold 30 is provided on the upper side of the tire vulcanization mold 10. The mold 30 faces the mold 20 in the up-down direction. The mold 30 is mounted on a mold base 14. In this embodiment, the mold base 14 is mounted on a press machine and is configured to be movable up and down. A bead ring 34 for holding a bead portion of the raw cover 110 is provided on the mold 30. The molds 20 and 30 may each be composed of a plurality of mold members.

The mold 40 is a mold member for forming the tread portion of the tire. The forming surface 42 of the mold 40 is a surface for forming the tread portion of the tire. The forming surface 42 is provided with protrusions 42a for forming recesses such as grooves, sipes, and slits on the tread surface of the tire. The tire vulcanization mold 10 is provided with a plurality of molds 40 split along the circumferential direction. The plurality of molds 40 are arranged at predetermined intervals in the circumferential direction.

The plurality of molds 40 are driven radially inward and outward by a mold opening/closing mechanism 16. The mold opening/closing mechanism 16 includes a slider 16a on which the molds 40 are mounted, and a pusher 16b that is driven in the up-down direction. An inclined surface is formed in the outer surface of the slider 16a so as to widen as extending downward. An inclined surface is formed on the pusher 16b so as to face the inclined surface of the slider 16a and widen as extending downward. The slider 16a moves inward and outward by contact between the inclined surface of the pusher 16b and the inclined surface of the slider 16a. Accordingly, the molds 40 are opened and closed in the radial direction.

Although not shown, before vulcanization of the tire, the molds 40 are positioned on the radially outer side in a state where the adjacent molds 40 are separated from each other. At this time, the mold 30 is held above the raw cover 110. During vulcanization of the tire, the molds 40 move radially inward. The plurality of molds 40 become contiguous with each other in the circumferential direction. At the same time, the mold 30 held above the raw cover 110 moves downward. Accordingly, the tire vulcanization mold 10 is closed, and the molds 20, 30, and 40 become contiguous with each other. During vulcanization of the tire, in a state where the tire vulcanization mold 10 is closed, the raw cover 110 supported by the bladder 68 is pressed against the forming surfaces 22, 32, and 42 of the molds 20, 30, and 40.

### <Bladder Center Mechanism 60>

The bladder center mechanism 60 includes a center post 62, clamp rings 64 and 66, and the bladder 68.

The bladder 68 is provided in the mold internal space 10a. The bladder 68 is a member that is pressed against the inner surface of the raw cover 110. The bladder 68 is a tubular elastic body made of rubber. When the bladder 68 expands, the raw cover 110 is pressed against the forming surfaces 22, 32, and 42 of the molds 20, 30, and 40, thereby forming the outer shape of the tire. The bladder 68 is positioned at a center portion between the molds 20 and 30 facing each other in the up-down direction. The bladder 68 is held with the center post 62 as a central axis.

The center post 62 is a shaft-like member that extends along the direction in which the molds 20 and 30 face each other. The center post 62 penetrates a center portion of the mold 20 for forming the sidewall portion 114 below the mold 20. The pair of clamp rings 64 and 66 are mounted on the center post 62 so as to face each other.

The clamp ring 66 is a disk-shaped member that is mounted on an upper end portion of the center post 62. The clamp ring 66 is a member that holds an upper end portion of the bladder 68. Although not shown, the clamp ring 66 is, for example, a member that can be divided into upper and lower parts and may be structured to hold a peripheral edge portion on the upper end side of the bladder 68 between the upper and lower parts. The clamp ring 64 is a disk-shaped member that is mounted on the upper surface of the bead ring 24. The clamp ring 64 may be mounted on the center post 62. The clamp ring 64 is a member that holds a lower end portion of the bladder 68. The lower end portion of the bladder 68 may be held by being sandwiched between the clamp ring 64 and the bead ring 24.

A fluid (water vapor, nitrogen, etc.) is supplied from a fluid supply device, which is not shown, to the space surrounded by the clamp rings 64 and 66 and the bladder 68. In the mold internal space 10a of the tire vulcanization mold 10, heat and pressure are applied to the raw cover 110 from the inner side. Accordingly, the raw cover 110 is heated while being pressed against the tire vulcanization mold 10, thereby vulcanizing and molding the tire.

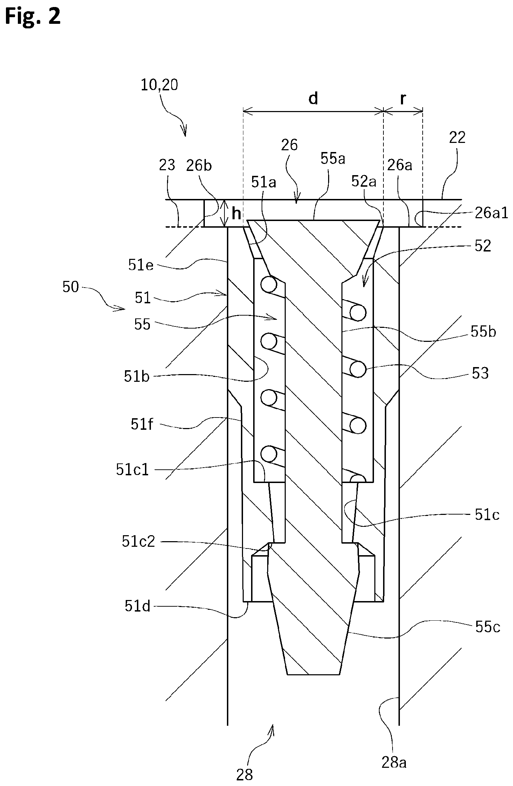

Hereinafter, the configuration of the tire vulcanization mold 10 used in the tire vulcanizer 1 will be described using the side mold 20 as an example. FIG. 2 is a cross-sectional view of the side mold 20.

The configuration described below is not limited to being provided in the side mold 20. This configuration may be provided, for example, in the side mold 30, in the bead rings 24 and 34 connected to the side molds 20 and 30, or in the tread molds 40.

### <Side Mold 20>

As shown in FIG. 2, the side mold 20 (tire vulcanization mold 10) includes the forming surface 22, a recess 26, a vent hole 28, and a spring vent 50.

### <Forming Surface 22>

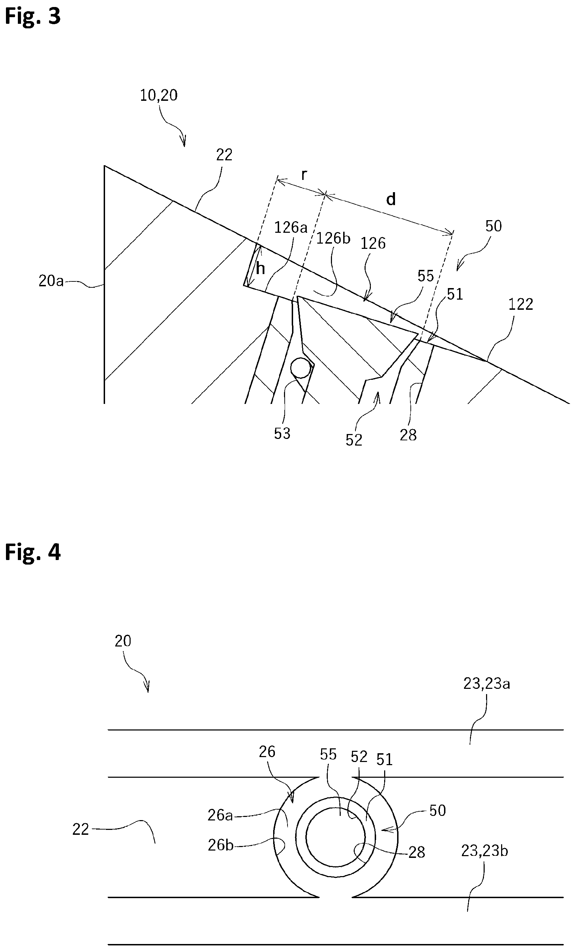

The forming surface 22 is a surface for forming the outer shape of the tire. The forming surface 22 is a surface for forming the sidewall portion 114 of the raw cover 110 during tire vulcanization (see FIG. 1). The forming surface 22 is provided with a configuration for discharging gas generated between the raw cover 110 and the side mold 20 during vulcanization. The vent hole 28 and a vent line 23 (see FIG. 4) are formed in the forming surface 22. The vent hole 28 is formed in the recess 26 of the forming surface 22.

### <Recess 26>

The recess 26 is formed in the forming surface 22. The recess 26 is recessed relative to the forming surface 22. Therefore, during vulcanization of the tire, the raw cover 110 (see FIG. 1) can flow into the recess 26 after being pressed against the forming surface 22 by the bladder 68 (see FIG. 1). Depending on the dimensions of the recess 26, the portion that has entered the recess 26 can protrude at the sidewall portion relative to the area around the portion in the vulcanized tire. The planar shape of the recess 26 is not particularly limited. The planar shape of the recess 26 may be, for example, circular, elliptical, or polygonal (e.g., quadrangular) when viewed perpendicular to the forming surface 22. In this embodiment, the planar shape of the recess 26 is circular (see FIG. 4).

The recess 26 includes a bottom portion 26a and a side periphery portion 26b. The side periphery portion 26b is connected to the bottom portion 26a and the forming surface 22. In the embodiment shown in FIG. 2, the side periphery portion 26b rises substantially vertically from an edge 26a1 of the bottom portion 26a. The side periphery portion 26b may be inclined with respect to the bottom portion 26a. In the recess 26, the bottom portion 26a is lower than the forming surface 22. In this embodiment, the bottom portion 26a has a circular shape. The bottom portion 26a is substantially parallel to the forming surface 22. The vent hole 28 is formed in a center portion of the bottom portion 26a.

### <Vent Hole 28>

The vent hole 28 is formed in a part of the bottom portion 26a of the recess 26. The vent hole 28 is a hole for discharging gas generated between the tire vulcanization mold 10 and the raw cover 110 (see FIG. 1) during vulcanization. Although not shown in detail, the vent hole 28 penetrates the side mold 20 and is connected to the outside of the tire vulcanization mold 10. The spring vent 50 is mounted in the vent hole 28.

### <Spring Vent 50>

The spring vent 50 includes a tubular housing 51 and a stem 55. Hereinafter, an example of the spring vent 50 that can be applied to the tire vulcanization mold 10 disclosed herein will be described. The configuration of the spring vent 50 is not limited to a configuration described below.

### <Housing 51>

The housing 51 has a shape corresponding to an inner circumferential surface 28a of the vent hole 28. In this embodiment, the housing 51 has a substantially cylindrical shape. The housing 51 includes a front portion 51e and a rear portion 51f having a smaller diameter than the front portion 51e. When the housing 51 is mounted on the side mold 20, the front portion 51e is positioned on the forming surface 22 side, and the rear portion 51f is positioned on a side far from the forming surface 22. The outer diameter of the front portion 51e of the housing 51 mounted on the side mold 20 is substantially the same as the inner diameter of the vent hole 28. The outer diameter of the front portion 51e of the housing 51 before being mounted on the side mold 20 can be made slightly larger than the inner diameter of the vent hole 28. Therefore, the housing 51 can be press-fitted into the vent hole 28. Accordingly, the outer circumferential surface of the front portion 51e of the housing 51 can be held on the inner circumferential surface 28a of the vent hole 28. In the embodiment shown in FIG. 2, the outer diameter of the rear portion 51f of the housing 51 is smaller than the inner diameter of the vent hole 28. When mounting the housing 51 in the vent hole 28, the housing 51 is press-fitted into the vent hole 28 in a state where the rear portion 51f is inserted into the vent hole 28. Accordingly, workability when mounting the spring vent 50 is good. A through hole 52 is formed in the housing 51.

The through hole 52 penetrates the housing 51 along an axial direction (direction in which the vent hole 28 extends). A cross-sectional shape of the through hole 52 is substantially circular. The housing 51 includes an opening portion 51a, an accommodation portion 51b, a reduced-diameter portion 51c, and an end portion 51d. The through hole 52 penetrates the opening portion 51a, the accommodation portion 51b, the reduced-diameter portion 51c, and the end portion 51d. The opening portion 51a, the accommodation portion 51b, the reduced-diameter portion 51c, and the end portion 51d are aligned in order from the side facing the forming surface 22, along the direction in which the vent hole 28 extends, when the housing 51 is mounted in the vent hole 28.

The opening portion 51a is provided at an end portion on the forming surface 22 side. The opening portion 51a is tapered such that the diameter thereof increases toward the forming surface 22. The accommodation portion 51b is open with substantially the same diameter from the opening portion 51a toward the reduced-diameter portion 51c. A spring 53 described later is accommodated in the accommodation portion 51b. The reduced-diameter portion 51c is a portion having a smaller inner diameter than the accommodation portion 51b and the end portion 51d. The end portion 51d is a portion that has a larger diameter than the reduced-diameter portion 51c and is open at an end portion on the side opposite to the forming surface 22. The stem 55 is inserted into the through hole 52 of the housing 51.

### <Stem 55>

The stem 55 is inserted into the through hole 52 of the housing 51. The stem 55 includes a head portion 55a, a shaft portion 55b, and an end portion 55c. The head portion 55a, the shaft portion 55b, and the end portion 55c are aligned in order from the side facing the forming surface 22, along the direction in which the vent hole 28 extends. The head portion 55a is provided at an end portion on the forming surface 22 side.

The head portion 55a is tapered such that the diameter thereof increases toward the forming surface 22. The head portion 55a is longer than the opening portion 51a. The shaft portion 55b has a substantially circular column shape extending with substantially the same diameter from the head portion 55a toward the end portion 55c. The shaft portion 55b has an outer diameter smaller than the inner diameter of the reduced-diameter portion 51c. The shaft portion 55b is inserted into the accommodation portion 51b and the reduced-diameter portion 51c. The end portion 55c is accommodated in the end portion 51d of the housing 51. The end portion 55c has a larger diameter than the shaft portion 55b. Accordingly, the end portion 55c is positioned outward of the reduced-diameter portion 51c (on the side opposite to the forming surface 22). The spring (coil spring) 53 is interposed between the housing 51 and the stem 55.

### <Spring 53>

The spring 53 is accommodated in the accommodation portion 51b of the housing 51 in a state where the shaft portion 55b of the stem 55 is inserted thereinto. The spring 53 is accommodated in the housing 51 in a compressed state where the spring 53 is shorter than the natural length thereof. One end of the spring 53 is in contact with the head portion 55a of the stem 55. The other end of the spring 53 is in contact with a step 51c1, between the accommodation portion 51b and the reduced-diameter portion 51c, of the housing 51. The spring 53 biases the head portion 55a of the stem 55 toward the mold internal space 10a. When the spring 53 biases the head portion 55a, the end portion 55c of the stem 55 comes into contact with a step 51c2, between the reduced-diameter portion 51c and the end portion 51d, of the housing 51. Accordingly, the head portion 55a does not protrude by a predetermined length or more from the forming surface 22.

Before vulcanization of the tire, the head portion 55a can protrude from the forming surface 22. At this time, a gap is formed between the opening portion 51a of the housing 51 and the head portion 55a of the stem 55. This gap provides communication between the mold internal space 10a and the vent hole 28. During vulcanization of the tire, gas in the mold internal space 10a (gas generated between the raw cover 110 and the tire vulcanization mold 10) passes through the gap between the opening portion 51a of the housing 51 and the head portion 55a of the stem 55 and flows to the vent hole 28. The gas from the mold internal space 10a passes through the vent hole 28 and is discharged to the outside of the tire vulcanization mold 10.

When the raw cover 110 is vulcanized and the rubber of the raw cover 110 (in this embodiment, the rubber of the sidewall portion 114) is pressed against the forming surface 22, the rubber is also pressed against the head portion 55a of the stem 55 of the spring vent 50. At this time, when the head portion 55a of the stem 55 is pressed with a force stronger than the biasing force of the spring 53, the head portion 55a of the stem 55 is pressed toward the housing 51. When the head portion 55a of the stem 55 comes into contact with the opening portion 51a of the housing 51, the gap between the head portion 55a of the stem 55 and the opening portion 51a of the housing 51 is closed.

Meanwhile, according to the findings of the present inventors, when a tire is vulcanized using a tire vulcanization mold including a spring vent, there is a concern that rubber may enter the gap between the housing of the spring vent and a stem. When the rubber has entered the gap between the housing of the spring vent and the stem, it becomes difficult for gas generated between the tire vulcanization mold and a raw cover to escape from the spring vent. If the gas generated between the tire vulcanization mold and the raw cover does not escape to the outside of the tire vulcanization mold, there is a concern that defects (such as voids) may occur on the surface of the vulcanized tire due to a vulcanization failure. In addition, the above vulcanization failure is likely to occur at the time of the next vulcanization.

In this embodiment, the vent hole 28 in which the spring vent 50 is mounted is provided in the bottom portion 26a of the recess 26.

Here, a depth h of the recess 26 is set to 1.0 mm or less. The depth h of the recess 26 may be set to 0.7 mm or less. The depth h of the recess 26 may be set to 0.1 mm or more or may be set to 0.25 mm or more. In this embodiment, the depth h of the recess 26 is set to 0.5 mm. The "depth h of the recess" is the distance between a plane along the forming surface and the bottom portion of the recess in a direction perpendicular to this plane. In other words, the "depth h" is the distance, from the opening of the recess to the bottom portion, along the forming surface and is a depth in a direction perpendicular to the forming surface. In the case where the bottom portion is inclined with respect to the forming surface, the "depth h" refers to the depth of a deepest part of the recess.

Moreover, a distance r between an edge 52a of the through hole 52 of the housing 51 and the edge 26a1 of the bottom portion 26a of the recess 26 is set to be equal to or less than a diameter d of the through hole 52. The distance r may be set to be 0.5 times or less the diameter d or may be set to be 0.3 times or less the diameter d. In this embodiment, the distance r is set to be 0.25 times the diameter d. The distance r may be set to be 0.1 times or more the diameter d. The diameter d of the through hole 52 is not particularly limited but is 1 mm or more and may be 1.5 mm or more. The diameter d of the through hole 52 is 10 mm or less and may be 5 mm or less.

The "distance r between the edge of the through hole and the edge of the bottom portion of the recess" (hereinafter also referred to simply as "distance r") is the distance, between the edge of the through hole of the housing and the edge of the bottom portion, along the radially outward direction. In the case where the bottom portion of the recess is inclined with respect to the forming surface, the "distance r" refers to the distance between the deepest part of the bottom portion of the recess and the edge of the through hole closest to this part. In the case where the distance between the edge of the through hole of the housing and the edge of the bottom portion is not constant (e.g., the case where the shape of the bottom portion of the recess is not circular), the "distance r" refers to the minimum distance of this distance. For example, in the case where the through hole of the housing has a circular shape and the bottom portion of the recess has a square shape, the "distance r" is the distance from the edge of the circular through hole to the nearest point on the outer edge of the square bottom portion.

In the embodiment described above, the tire vulcanization mold 10 (in this embodiment, the side mold 20) includes the forming surface 22, the recess 26, the vent hole 28, and the spring vent 50. The forming surface 22 forms the outer shape of the tire. The recess 26 is formed in the forming surface 22. The recess 26 includes the bottom portion 26a. The vent hole 28 is formed in a part of the bottom portion 26a of the recess 26. The spring vent 50 is mounted in the vent hole 28. The spring vent 50 includes the tubular housing 51 and the stem 55. The through hole 52 is formed in the housing 51. The stem 55 is inserted into the through hole 52 of the housing 51. The depth h of the recess 26 is 1.0 mm or less. The distance r between the edge 52a of the through hole 52 and the edge 26a1 of the bottom portion 26a of the recess 26 is equal to or less than the diameter d of the through hole 52.

Here, the vent hole 28 in which the spring vent 50 is mounted is formed in a part of the bottom portion 26a of the recess 26. Accordingly, during vulcanization, the rubber of the raw cover 110 contacts the forming surface 22 and then contacts the stem 55 of the spring vent 50. In addition, the rubber of the raw cover 110 is likely to contact the stem 55 in the axial direction of the stem 55. Accordingly, the gap between the housing 51 and the stem 55 is easily closed without the rubber being pinched therebetween. For example, compared to the case where the spring vent is provided on the forming surface, the rubber is less likely to flow into the gap between the housing 51 and the stem 55 from the radially outer side of the stem 55. As a result, defects due to gas not escaping to the outside of the tire vulcanization mold 10 are less likely to occur. In addition, gas generated during vulcanization is likely to flow into the recess 26 from between the raw cover 110 and the forming surface 22 and then be discharged through the spring vent 50. In other words, before the raw cover 110 contacts the stem 55 and the gap of the spring vent 50 is closed, the gas generated during vulcanization is likely to accumulate in the recess 26. Accordingly, the gas generated during vulcanization is less likely to remain inside the tire vulcanization mold 10.

By setting the depth h of the recess 26 to 1.0 mm or less, defects due to the above-described vulcanization failure are reduced while maintaining the gas discharge performance of the tire vulcanization mold 10. In addition, an appearance defect and an increase in air resistance due to the rubber entering the recess 26 are less likely to occur in the vulcanized tire. The distance r between the edge 52a of the through hole 52 and the edge 26a1 of the bottom portion 26a of the recess 26 is equal to or less than the diameter d of the through hole 52. Accordingly, the amount of the rubber that can flow into the gap between the housing 51 and the stem 55 from the radially outer side of the stem 55 is reduced. As a result, defects due to the rubber being pinched between the housing 51 and the stem 55 are reduced.

In the embodiment described above, the planar shape of the recess 26 is circular. Accordingly, gas is likely to flow into the space surrounded by the recess 26, uniformly in the circumferential direction of the recess 26. As a result, gas is likely to uniformly flow into the spring vent 50, so that the gas discharge performance from the tire vulcanization mold 10 can be improved. In addition, the timing of the rubber flowing into the recess 26 is likely to coincide in the circumferential direction of the recess 26. As a result, defects due to the rubber being pinched between the housing 51 and the stem 55 are likely to be reduced.

In the embodiment described above, the vent hole 28 is formed in the center portion of the bottom portion 26a of the recess 26. Owing to this configuration, gas flowing into the recess 26 is likely to flow into the spring vent 50 in a well-balanced manner, so that the gas discharge performance from the vent hole 28 can be improved.

In the embodiment described above, the recess 26 is substantially parallel to the forming surface 22. However, the configuration is not limited to such a configuration, and the recess 26 may be inclined with respect to the forming surface 22.

FIG. 3 is a cross-sectional view of the side mold 20. FIG. 3 shows a cross-section of a portion of the side mold 20 near the boundary with another mold (e.g., the tread mold 40, the bead ring 24). FIG. 3 shows a cross-section of a portion of the side mold 20 near the boundary with the bead ring 24.

As shown in FIG. 3, the side mold 20 includes a recess 126. The recess 126 is provided in the vicinity of a boundary surface 20a of the side mold 20. The boundary surface 20a is a surface forming the boundary with another mold (e.g., the tread mold 40, the bead ring 24, etc.) and is also referred to as split position of the side mold 20. The angle formed between the boundary surface 20a and the forming surface 22 is smaller than 90 degrees. The angle formed between the boundary surface 20a and the forming surface 22 is not particularly limited but may be about 45 degrees or more and less than 90 degrees (e.g., 60 degrees or more and 80 degrees or less).

A bottom portion 126a of the recess 126 is inclined with respect to the forming surface 22. The bottom portion 126a is connected to the forming surface 22 at a portion 122 farthest from the forming surface 22. Except for the portion 122 farthest from the forming surface 22, the bottom portion 126a is connected to a side periphery portion 126b. The side periphery portion 126b is connected to the forming surface 22 and is substantially perpendicular to the forming surface 22. In the case where the bottom portion and the forming surface are connected to each other, the angle of the bottom portion with respect to the forming surface is an angle with the connected portion (in this embodiment, the portion 122 farthest from the forming surface 22) as a vertex. In the case where the bottom portion and the forming surface are not connected to each other, the angle of the bottom portion with respect to the forming surface is an angle with a portion obtained by extending the bottom portion in the plane direction and overlapping the forming surface, as a vertex.

By inclining the bottom portion 126a of the recess 126 with respect to the forming surface 22, it is easy to adjust the direction in which the vent hole 28 extends from the bottom portion 126a. By adjusting the angle of the bottom portion 126a with respect to the forming surface 22, the direction in which the vent hole 28 extends can be adjusted such that the vent hole 28 does not reach the boundary surface 20a, but such adjustment is not particularly limited thereto. For example, by causing the angle between the boundary surface 20a and a surface obtained by extending the bottom portion 126a in the plane direction to be closer to 90 degrees, the vent hole 28 can be made less likely to come closer to the boundary surface 20a.

The angle at which the bottom portion 126a is inclined with respect to the forming surface 22 can be set to about 45 degrees or less but is not particularly limited thereto. By setting the angle at which the bottom portion 126a is inclined with respect to the forming surface 22 to about 45 degrees or less, the resistance to gas flowing through the vent hole 28 is less likely to be influenced.

FIG. 4 is a plan view of the side mold 20. The recess 26 (see FIG. 2) and the recess 126 (see FIG. 3) described above may be connected to the vent line 23. Hereinafter, the case where the recess 26 is connected to the vent line 23 will be described. The same configuration may be applied to the case where the recess 126 is connected to the vent line 23, and thus the detailed description of such a case is omitted.

### <Vent Line 23>

As shown in FIG. 4, the vent line 23 is a groove formed in the forming surface 22. The vent line 23 is formed along the circumferential direction of the side mold 20 (circumferential direction of the tire). A cross-sectional shape of the vent line 23 is not particularly limited. The cross-sectional shape of the vent line 23 may be, for example, substantially quadrangular or substantially semicircular when viewed along the direction in which the vent line 23 extends. The vent line 23 can be formed in each of a plurality of side molds 20 so as to be annularly continuous when the plurality of side molds 20 are contiguous with each other. Accordingly, during vulcanization of the tire, gas generated between the raw cover 110 and the side mold 20 can flow through the vent line 23. Accordingly, gas can be prevented from locally accumulating between the raw cover 110 and the side mold 20. The number of vent lines is not particularly limited and may be one or may be two or more. Vent lines may not necessarily be provided.

In this embodiment, at least two vent lines 23a and 23b can be formed in the forming surface 22. The vent line 23a is provided radially inward of the vent line 23b when viewed from the axis center of the tire vulcanizer 1 (see FIG. 1) (axis center of the center post 62). The recess 26 is provided in the forming surface 22 so as to be connected to the two vent lines 23a and 23b. The recess 26 is provided between the two vent lines 23a and 23b.

Owing to this configuration, gas flowing through the two vent lines 23a and 23b during vulcanization flows into the recess 26 from different directions. Then, the gas can be discharged through the spring vent 50. Since the gas flowing through the two vent lines 23a and 23b flows into the recess 26 from the different directions, the gas flowing through both vent lines 23a and 23b is likely to be discharged in a well-balanced manner through the spring vent 50. As a result, the efficiency of discharging gas to the outside of the tire vulcanization mold 10 can be improved. In addition, there is no need to provide the spring vent 50 for each vent line 23. Therefore, the number of spring vents 50 can be reduced. Moreover, in the vulcanized tire, a portion that has entered the recess 26 is not formed on the outer side of the two vent lines 23a and 23b. As a result, the appearance quality of the vulcanized tire can be improved.

The depth of the vent line 23 can be set to be equal to or less than the depth of the recess 26. Accordingly, the rubber is less likely to flow into the gap between the housing 51 and the stem 55 from the vent line 23 side (radially outer side of the stem 55). In this embodiment, the depth of the vent line 23 is the same as the depth of the recess 26. Accordingly, the rubber is less likely to flow into the gap between the housing 51 and the stem 55, and the height of the portion protruding with respect to the surrounding area (rubber that has entered the recess 26) in the vulcanized tire is likely to be reduced. The depth of the vent line 23 is not particularly limited.

In this embodiment, the side periphery portion 26b of the recess 26 is connected to the two vent lines 23a and 23b. Accordingly, the recess 26 is directly connected to the two vent lines 23a and 23b without any grooves inclined with respect to the vent lines 23, etc. In this embodiment, the planar shape of the recess 26 is substantially circular. The side periphery portion 26b has a substantially semicircular arc shape in a plan view except for portions connected to the two vent lines 23a and 23b. Owing to this configuration, gas generated during vulcanization is likely to rapidly flow through the vent lines 23a and 23b into the spring vent 50. As a result, the efficiency of discharging gas to the outside of the tire vulcanization mold 10 can be improved.

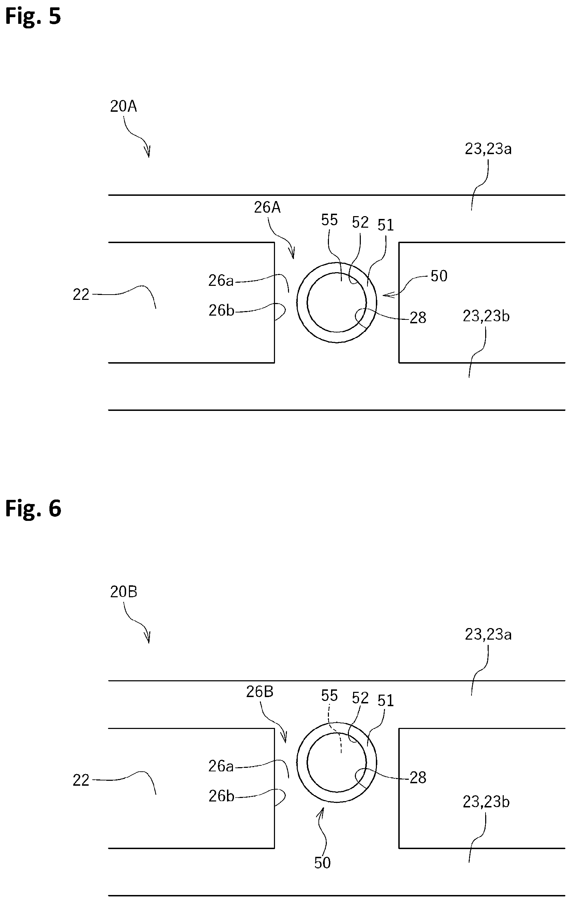

The connection between the recess 26 and the vent line 23 is not limited to the embodiment described above. FIG. 5 is a plan view of a side mold 20A according to another embodiment. As shown in FIG. 5, the side mold 20A includes a recess 26A having a substantially square shape in a plan view. A vent hole 28 is formed in the recess 26A. A spring vent 50 is mounted in the vent hole 28. Two opposing sides of the recess 26A having a substantially square shape are connected to two vent lines 23a and 23b. Accordingly, portions where the recess 26A having a substantially square shape is connected to the two vent lines 23a and 23b are widened, so that the efficiency of gas flowing into the spring vent 50 can be improved.

FIG. 6 is a plan view of a side mold 20B according to still another embodiment. As shown in FIG. 6, the side mold 20B includes a recess 26B having a substantially square shape in a plan view. A vent hole 28 is formed in the recess 26B. A spring vent 50 is mounted in the vent hole 28. Here, the vent hole 28 is formed at a position overlapping one vent line 23a out of two vent lines 23a and 23b. The spring vent 50 overlaps the vent line 23a. In this case as well, the efficiency of discharging gas to the outside of the tire vulcanization mold 10 can be improved. If there is a difference in gas flow rate between the two vent lines, the vent hole can be formed so as to overlap or be adjacent to the vent line with the higher gas flow rate. Accordingly, the amount of gas flowing in from the two vent lines can be adjusted.

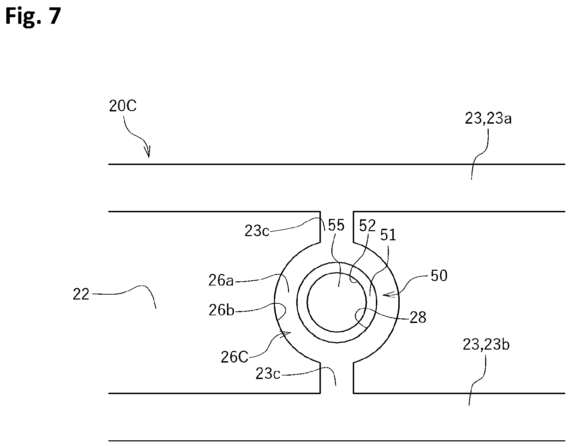

FIG. 7 is a plan view of a side mold 20C according to still another embodiment. As shown in FIG. 7, the side mold 20C includes a recess 26C having a substantially circular shape in a plan view. A vent hole 28 is formed in the recess 26C. A spring vent 50 is mounted in the vent hole 28. Two vent lines 23a and 23b are connected via grooves 23c inclined with respect to the vent lines 23a and 23b. The angles between the two vent lines 23a and 23b and the groves 23c are not particularly limited. The recess 26C is provided so as to overlap the grooves 23c. In other words, the recess 26C is connected to the two vent lines 23a and 23b via the groves 23c. In this case as well, the efficiency of discharging gas to the outside of the tire vulcanization mold 10 can be improved.

Hereinafter, examples regarding the present disclosure will be described, but the present disclosure is not intended to be limited to the examples shown below. Table 1 shows the results of evaluation of vulcanized tires obtained through vulcanization using tire vulcanization molds in which the depth h of the recess, the magnitude relationship between the distance r and the diameter d in the recess, the angle of the bottom portion of the recess with respect to the forming surface, and the presence or absence of connection between the recess and the vent line were changed. In this embodiment, each recess shown in Table 1 was provided in the side mold of the tire vulcanization mold, and the above evaluation was performed. A plurality of vent lines are formed along the circumferential direction in the tire vulcanization mold of each example. Except for Examples 6 and 7, in each tire vulcanization mold, a vent hole is formed in the bottom portion of the recess, and a spring vent is mounted in the vent hole. In Example 6, in the tire vulcanization mold, the above-described recess is not provided, but a vent hole is formed. In Example 7, in the tire vulcanization mold, a projection having a height of 0.5 mm is provided instead of the above-described recess. The projection is denoted as "-0.5" in Table 1.

Here, the frequency of occurrence of defects in the vulcanized tire and the aerodynamic performance of the tire vulcanization mold are evaluated. In Table 1, the magnitude relationship between the distance r and the diameter d is represented as the ratio (r/d) of the distance r to the diameter d.

The evaluation method is as follows. Two thousand evaluation tires having a tire size of 245/40R18 were consecutively vulcanized. The number of tires in which bareness occurred among the 1,900th to 2,000th evaluation tires was counted. The evaluation tires in which no bareness occurred were selected and mounted to a vehicle, and an aerodynamic evaluation test was performed. In the aerodynamic evaluation test, each example was relatively evaluated with the aerodynamic performance of the evaluation tire vulcanized using the tire vulcanization mold of Example 8 as 100. As for the aerodynamic performance, a higher value indicates that the air resistance is lower and that the aerodynamic performance is better. The results are shown below.

**[Table 1]**

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|
| Connection between vent line and recess | Absence | Absence | Absence | Absence | Absence | Absence | Absence | Absence | Absence | Absence | Absence | Presence | Presence |
| h (mm) | 0.1 | 0.5 | 1 | 2 | 0.5 | - | -0.5 | 0.5 | 0.5 | 0.5 | 0.2 | 0.5 | 0.5 |
| r/d | 0.25 | 0.25 | 0.25 | 0.25 | 0.5 | - | 0.25 | 0.25 | 1 | 1.5 | 0.25 | 0.25 | 0.25 |
| Angle (degrees) | 0 | 0 | 0 | 0 | 0 | - | 20 | 20 | 20 | 20 | 20 | 20 | 60 |
| Aerodynamic effect | 103 | 100 | 97 | 91 | 100 | 105 | 106 | 100 | 100 | 100 | 102 | 100 | 97 |
| Bareness occurrence (number of tires) | 8 | 2 | 1 | 1 | 3 | 81 | 109 | 0 | 5 | 29 | 0 | 0 | 0 |
| Number of spring vents | 12 | 12 | 12 | 12 | 12 | 12 | 12 | 12 | 12 | 12 | 12 | 8 | 8 |

In Example 6 in which no recess was provided in the tire vulcanization mold, bareness occurred in more vulcanized tires compared to Examples 1 to 5. Similarly, in Example 7 in which the projection was provided in the tire vulcanization mold, bareness occurred in more vulcanized tires compared to Examples 1 to 5. From the above, it is found that the occurrence of bareness is reduced by providing a recess, in which a spring vent is provided, in a tire vulcanization mold.

From comparison of Examples 1 to 4, it was found that when the depth of the recess was 1.0 mm or less, the aerodynamic effect was good. Additionally, when the depth of the recess was greater than 0.1 mm, the occurrence of bareness in the vulcanized tires was suppressed. From comparison of Examples 5 and 8 to 10, it was found that by setting the distance r to be equal to or less than the diameter d, the occurrence of bareness in the vulcanized tires was reduced. From Examples 8 to 13, it was found that the occurrence of bareness in the vulcanized tires was suppressed even when the bottom portion of the recess was inclined with respect to the forming surface. From Examples 12 and 13, it was found that when the vent line and the recess were connected, the occurrence of bareness in the vulcanized tires was suppressed even if the number of spring vents was reduced.

The technology disclosed herein has been described above in various ways. However, the technology disclosed herein is not limited to the above-described embodiments unless otherwise specified. In addition, the configurations of the various embodiments described can be appropriately combined as long as the configurations do not interfere with each other. The present specification includes the following disclosures, which are not limited to the above-described embodiments.

Present Invention (1) is directed to a tire vulcanization mold. The tire vulcanization mold according to Present Invention (1) includes:
a forming surface for forming an outer shape of a tire;
a recess formed in the forming surface and including a bottom portion;
a vent hole formed in a part of the bottom portion of the recess; and
a spring vent mounted in the vent hole, wherein
the spring vent includes a tubular housing having a through hole formed therein and a stem inserted into the through hole of the housing,
the recess has a depth of 1.0 mm or less, and
a distance between an edge of the through hole and an edge of the bottom portion of the recess is equal to or less than a diameter of the through hole.

Present Invention (2) is the tire vulcanization mold according to Present Invention (1), wherein
at least two vent lines are formed in the forming surface, and
the recess is formed between the two vent lines and connected to the two vent lines.

Present Invention (3) is the tire vulcanization mold according to Present Invention (2), wherein
the recess includes a side periphery portion connected to the bottom portion and the forming surface, and
the side periphery portion of the recess is connected to the two vent lines.

Present Invention (4) is the tire vulcanization mold according to any one of Present Inventions (1) to (3), wherein the bottom portion of the recess is inclined with respect to the forming surface.

Present Invention (5) is the tire vulcanization mold according to Present Invention (4), wherein an angle at which the bottom portion is inclined with respect to the forming surface is 45 degrees or less.

Present Invention (6) is the tire vulcanization mold according to any one of Present Inventions (1) to (5), wherein a planar shape of the recess is circular.

Present Invention (7) is the tire vulcanization mold according to any one of Present Inventions (1) to (6), wherein the vent hole is formed in a center portion of the bottom portion of the recess.

## Claims

1. A tire vulcanization mold (10) comprising:
a forming surface (22) for forming an outer shape of a tire;
a recess (26, 26A, 26B, 26C, 126a) formed in the forming surface (22) and including a bottom portion (26a, 126a);
a vent hole (28) formed in a part of the bottom portion (26a, 126a) of the recess (26, 26A, 26B, 26C, 126a); and
a spring vent (50) mounted in the vent hole (28), wherein
the spring vent (50) includes a tubular housing (51) having a through hole (52) formed therein and a stem (55) inserted into the through hole (52) of the housing (51),
the recess (26, 26A, 26B, 26C, 126a) has a depth (h) of 1.0 mm or less, and
a distance (r) between an edge (52a) of the through hole (52) and an edge (26a1) of the bottom portion (26a, 126a) of the recess (26, 26A, 26B, 26C, 126a) is equal to or less than a diameter (d) of the through hole (52).

2. The tire vulcanization mold (10) according to claim 1, wherein
at least two vent lines (23, 23a, 23b) are formed in the forming surface (22), and
the recess (26, 26A, 26B, 26C, 126a) is formed between the two vent lines (23, 23a, 23b) and connected to the two vent lines (23, 23a, 23b).

3. The tire vulcanization mold (10) according to claim 2, wherein
the recess (26, 26A, 26B, 26C) includes a side periphery portion (26b) connected to the bottom portion (26a) and the forming surface (22), and
the side periphery portion (26b) of the recess (26, 26A, 26B, 26C) is connected to the two vent lines (23, 23a, 23b).

4. The tire vulcanization mold (10) according to any one of claims 1 to 3, wherein the bottom portion (26a, 126a) of the recess (26, 26A, 26B, 26C, 126a) is inclined with respect to the forming surface (22).

5. The tire vulcanization mold (10) according to claim 4, wherein an angle at which the bottom portion (26a, 126a) is inclined with respect to the forming surface (22) is 45 degrees or less.

6. The tire vulcanization mold (10) according to any one of claims 1 to 5, wherein a planar shape of the recess (26, 26C) is circular.

7. The tire vulcanization mold (10) according to any one of claims 1 to 6, wherein the vent hole (28) is formed in a center portion of the bottom portion (26a) of the recess (26, 26A, 26C).
